# EUROPÄISCHE PATENTANMELDUNG

(11) **EP 1 935 894 A1**
(43) Veröffentlichungstag der Anmeldung: **25.06.2008**
(21) Anmeldenummer: 07023436.4
(22) Anmeldetag: 04.12.2007
(51) Int. Cl.: C07F 9/30, C08K 5/5313, C09K 21/14

(54) **Carboxyethyl(alkyl)phoshinsäure-Alkylestersalze**

(30) Priorität: 12.12.2006 DE 102006058414
(71) Anmelder: Clariant International Ltd., 4132 Muttenz (CH)
(72) Erfinder: Bauer, Harald, 50170 Kerpen (DE); Hörold, Sebastian, Dr, 86420 Diedorf (DE); Krause, Werner, Dr., 50354 Hürth (DE)
(74) Vertreter: Hütter, Klaus

(57) **Zusammenfassung**

Die Erfindung betrifft Carboxyethyl(alkyl)phosphinsäure-Alkylestersalze der Formel (I)

R¹-P(=O)(OX)-CH₂-CH₂-CO₂R²

worin R¹ und R² gleich oder verschieden sind und unabhängig voneinander C₁-C₂₀-Alkyl, C₂-C₂₀-Alkenyl, C₁-C₂₀-Alkinyl, und/oder C₆-C₂₀-Aralkyl und
X ein Alkalimetall, ein Element der zweiten Haupt- und Nebengruppe, ein Element der dritten Haupt- und Nebengruppe, ein Element der vierten Haupt- und Nebengruppe, ein Element der fünften Haupt- und Nebengruppe, ein Element der sechsten Nebengruppe, ein Element der siebten Nebengruppe oder ein Element der achten Nebengruppe bedeuten sowie Verfahren zu deren Herstellung und ihre Verwendung.

## Beschreibung

Die Erfindung betrifft Carboxyethyl(alkyl)phosphinsäure-Alkylestersalze, Verfahren zu deren Herstellung und ihre Verwendung.

Die EP-A-1 125 960 beschreibt latente Kombinationsverbindungen aus Epoxidharzhärten und Flammschutzmitteln, sowie aus der Umsetzung dieser latenten Kombinationsverbindungen mit ein- oder mehrwertigen Hydroxyverbindungen erhältliche latente Ammoniumsalze. Letztere können zur Herstellung von Einkomponentenharzsystemen und daraus zugänglichen Formkörpern und Überzügen mit flammhemmenden Eigenschaften, in heißhärtbaren Einkomponentenepoxidharz-Klebstoffen eingesetzt und bei Harzinjektionsverfahren verwendet werden. Die EP-A-1 125 960 umfasst weiterhin Prepregs und Verbundwerkstoffe sowie Leiterplatten. Latente Ammoniumsalze wie 1-Methylimidazolium-(2-methoxycarbonyl-ethyl)-(methyl)phosphinat sind bei Raumtemperatur flüssig. Sie verbinden sich reaktiv als Härter oder Beschleuniger mit dem Epoxidharz.

Nachteilig an den Ammoniumsalzen ist die niedrige thermische Beständigkeit dieser flüssigen Substanzen, die die Verarbeitung in den üblichen Kunststoffanwendungen erschwert. Nachteilige Effekte sind auch Rauchentwicklung beim Extrudieren der Polymerformmassen, die flammgeschützt werden sollen und die leichte Herauslösbarkeit der Verbindungen.

Es ist Aufgabe der vorliegenden Erfindung, stabile Salze von Carboxy-ethyl(alkyl)-phosphinsäure-Alkylestern zur Verfügung zu stellen.

Gegenstand der Erfindung sind daher Carboxyethyl(alkyl)phosphinsäure-Alkylestersalze der Formel (I)

R¹-P(=O)(OX)-CH₂-CH₂-CO₂R²

worin R¹ und R² gleich oder verschieden sind und unabhängig voneinander C₁-C₂₀-Alkyl, C₂-C₂₀-Alkenyl, C₁-C₂₀-Alkinyl und/oder C₆-C₂₀-Aralkyl, und X ein Alkalimetall, ein Element der zweiten Haupt- und Nebengruppe, ein Element der dritten Haupt- und Nebengruppe, ein Element der vierten Haupt- und Nebengruppe, ein Element der fünften Haupt- und Nebengruppe, ein Element der sechsten Nebengruppe, ein Element der siebten Nebengruppe oder ein Element der achten Nebengruppe bedeuten.

Bevorzugt sind R¹ und R² gleich oder verschieden und bedeuten, unabhängig voneinander H, Methyl, Ethyl, n-Propyl, i-Propyl, n-Butyl, tert.-Butyl, n-Pentyl und/oder Phenyl.

Bevorzugt bedeutet X Li, Na, K; Mg, Ca, Zn, Sr; Al, Ce, La; Ge, Sn, Pb, Ti, Zr; Sb, Bi; Cr, Mo, W; Mn; Fe, Co oder Ni.

Besonders bevorzugt bedeutet X H, Na, Al, Zn, Ca, Mg, Ti oder Ce.

Es ist weiterhin Aufgabe der vorliegenden Erfindung, Verfahren zur Herstellung von Carboxyethyl(alkyl)phosphinsäure-Alkylestersalzen der Formel (I) zur Verfügung zu stellen.

Diese Aufgabe wird gelöst durch ein Verfahren zur Herstellung von Carboxyethyl(alkyl)phosphinsäure-Alkylestersalzen der Formel (I) worin R¹, R² und X die gleiche Bedeutung wie in Anspruch 1 haben, dadurch gekennzeichnet, dass ein Carboxyethyl(alkyl)-phosphinsäure-Alkylester der Formel (I), worin R¹, R² die gleiche Bedeutung wie in Anspruch 1 haben und X gleich H ist, in einem Lösungsmittelsystem mit einem Reaktionspartner I, bei dem es sich um eine Verbindung eines Alkalimetalls, eines Elements der zweiten Haupt- und Nebengruppe, eines Elements der dritten Haupt- und Nebengruppe, eines Elements der vierten Haupt- und Nebengruppe, eines Elements der fünften Haupt- und Nebengruppe, eines Elements der sechsten Nebengruppe, eines Elements der siebten Nebengruppe oder eines Elements der achten Nebengruppe handelt, umgesetzt wird.

Die vorgenannte Aufgabe wird aber auch gelöst durch ein Verfahren zur Herstellung von Carboxyethyl(alkyl)phosphinsäure-Alkylestersalzen der Formel (I) worin R¹, R² die gleiche Bedeutung wie in Anspruch 1 haben und X ein Element der zweiten Haupt- und Nebengruppe, ein Element der dritten Haupt- und Nebengruppe, ein Element der vierten Haupt- und Nebengruppe, ein Element der fünften Haupt- und Nebengruppe, ein Element der sechsten Nebengruppe, ein Element der siebten Nebengruppe oder ein Element der achten Nebengruppe ist, dadurch gekennzeichnet, dass ein Carboxyethyl(alkyl)-phosphinsäure-Alkylester-Alkalisalz der Formel (I), worin R¹, R² die gleiche Bedeutung wie in Anspruch 1 haben und X ein Alkalimetall bedeutet, in einem Lösungsmittelsystem mit einem Reaktionspartner II umgesetzt wird.

Bevorzugt handelt es sich bei dem Reaktionspartner II um Borate, Carbonate, Hydroxide, Oxide, Oxidhydroxide, Hydrogencarbonate, Hydrogencarbonat-hydrate, gemischte Hydrogencarbonate, gemischte Hydrogencarbonathydrate, Phosphate, Sulfate, Sulfathydrate, Hydrogensulfathydrate, gemischte Hydrogensulfathydrate, Oxysulfate, Acetate, Nitrate, Fluoride, Fluoridhydrate, Chlorid, Chloridhydrate, Oxychloride, Bromide, Iodide, Iodidhydrate, Carbonsäurederivate und/oder Alkoxide eines Elements der zweiten Haupt- und Nebengruppe, eines Elements der dritten Haupt- und Nebengruppe, eines Elements der vierten Haupt- und Nebengruppe, eines Elements der fünften Haupt- und Nebengruppe, eines Elements der sechsten Nebengruppe, eines Elements der siebten Nebengruppe oder eines Elements der achten Nebengruppe.

Die Erfindung betrifft auch die Verwendung von Carboxyethyl(alkyl)phosphinsäure-Alkylestersalzen der Formel (I) als Flammschutzmittel, insbesondere Flammschutzmittel für Klarlacke und Intumeszenzbeschichtungen, Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern, -Filmen, -Fäden und -Fasern und/oder zum flammhemmend Ausrüsten von Polyester und Cellulose-Rein- und Mischgeweben durch Imprägnierung.

Die Erfindung betrifft ebenfalls die Verwendung von Carboxyethyl(alkyl)phosphinsäure-Alkylestersalzen der Formel (I) als Binder für Giesereimassen, Formsande; als Vernetzer bzw. Beschleuniger beim Aushärten von Epoxyharzen, Polyurethanen und ungesättigten Polyesterharzen;
als Polymerstabilisatoren, wie als Lichtschutzstabilisator, Radikalfänger und/oder Thermostabilisatoren für Baumwollgewebe, Polymerfasern, Kunststoffe; als Pflanzenschutzmittel, wie als Pflanzenwachstumsregulator, als Herbizid, Pestizid oder Fungizid;
als Therapeutikum oder Additiv in Therapeutika für Menschen und Tiere, z.B. als Enzymmodulator, zur Stimulierung von Gewebewachstum;
als Sequestrierungsmittel, z.B. zur Kontrolle von Ablagerungen in industriellen Wasserleitungssystemen, bei der Mineralölgewinnung und in Metallbehandlungsmitteln;
als Mineralöl-Additiv, z.B. als Antioxidans und zur Erhöhung der Oktanzahl; oder als Korrosionsschutzmittel;
in Wasch- und Reinigungsmittelanwendungen, z.B. als Entfärbungsmittel;
in Elektronikanwendungen, z.B. in Polyelektrolyten für Kondensatoren, Batterien und Akkumulatoren, sowie als Radikalfänger in photosensitiven Schichten;
als Aldehydfänger;
Formaldehydfänger in Klebemassen und Formkörpern z.B. in Bauanwendungen, Automobil-, Schiff-, Luft und Raumfahrtindustrie und für die Elektrotechnik.

Die Erfindung betrifft auch eine flammgeschützte thermoplastische Polymerformmasse enthaltend 0,5 bis 45 Gew.-% Carboxyethyl(alkyl)phosphinsäure-Alkylestersalze der Formel (I) nach mindestens einem der Ansprüche 1 bis 4 und 0,5 bis 99,5 Gew.-% thermoplastisches Polymer oder Mischungen derselben, wobei die Summe der Komponenten 100 Gew.-% beträgt.

Bevorzugt handelt es sich bei den thermoplastischen Polymeren der flammgeschützten thermoplastischen Polymerformmasse um Polymere von Mono- und Diolefinen, beispielsweise Polyethylen, Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; um Polyvinylchlorid, Polyvinylidenchlorid, Polyvinylfluorid, Polyvinylidenfluorid; um Polyacrylate und Polymethacrylate, Polyacrylamide, Polyacrylnitrile, Polyvinylalkohol, Polyvinylacetat Polyalkylenglykole, Polyethylenoxyd, Polypropylenoxyd Polyoxymethylen Polyphenylenoxide und -sulfide Polyphenylenether, Polyurethane, Polyamide und Copolyamide, Polyharnstoffe, Polyimide, Polyamidimide, Polyetherimide, Polyesterimide, Polyhydantoine und Polybenzimidazole; um Polyester wie etwa Polyethylenterephthalat oder Polybutylenterephthalat.

Die Erfindung betrifft auch eine flammgeschützte duroplastische Masse, enthaltend 0,1 bis 45 Gew.-% Carboxyethyl(alkyl)phosphinsäure-Alkylestersalze der Formel (I) nach mindestens einem der Ansprüche 1 bis 4, 40 bis 89,9 Gew.-% ungesättigte Polyester und 10 bis 60 Gew.-% Vinylmonomer, wobei die Summe der Komponenten 100 Gew.-% beträgt.

Ein Verfahren zur Herstellung von solchen flammgeschützten Polymerformmassen ist dadurch gekennzeichnet, dass die Carboxyethyl(alkyl)phosphinsäure-Alkylestersalze der Formel (I) mit einem Polymergranulat und evtl. Additiven vermischt und auf einem Doppelschneckenextruder bei Temperaturen von ca. 170 °C (Polystyrol), ca. 270 °C (PET, Polyethylenterephthalat), 230 bis 260 °C (Polybutylenterephthalat, PBT), von ca. 260 °C (PA6) bzw. von 260 bis 280 °C (PA 66) eingearbeitet wird, dann der homogenisierte Polymerstrang abgezogen, im Wasserbad gekühlt, anschließend granuliert und auf einen Restfeuchtegehalt von 0,05 bis 5 %, bevorzugt von 0,1 bis 1 Gew.-%, getrocknet wird.

Die Erfindung betrifft auch eine flammwidrig ausgerüstetes Formmasse, enthaltend 0,5 bis 50 Gew.-% Carboxyethyl(alkyl)phosphinsäure-Alkylestersalze der Formel (I) nach mindestens einem der Ansprüche 1 bis 4, 5 bis 99,5 Gew.-% eines Epoxidharzes und 0 bis 20 Gew.-% eines Härters, wobei die Summe der Komponenten 100 Gew.-% beträgt.

Bevorzugt werden die vorgenannten flammwidrig ausgerüsteten Formmassen zur Herstellung von flammgeschützten Polymer-Formkörpern, -Filmen, -Fäden und -Fasern verwendet.

Die Erfindung umfasst auch Mischungen, enthaltend 0,1 - 99,9 Gew.-% Carboxyethyl(alkyl)phosphinsäure-Alkylestersalze der Formel (I) und 0,1 - 99,9 Gew.-% Carboxyethyl(alkyl)-phosphinsäure-Alkylestersalze der Formel (II)

R¹-P(=O)(OR²)-CH₂-CH₂-CO₂X

wobei R¹, R² und X die gleiche Bedeutung wie in Anspruch 1 haben.
Bevorzugt werden diese Mischungen zur Herstellung von flammgeschützten Polymerformmassen und von flammgeschützten Polymer-Formkörpern, -Filmen, -Fäden und -Fasern verwendet.

Schließlich betrifft die Erfindung auch ein Verfahren zur Herstellung von flammgeschützten Polymer-Formkörpern, dadurch gekennzeichnet, dass eine vorgenannte flammgeschützte Formmasse oder Mischungen aus Carboxyethyl(alkyl)-phosphinsäure-Alkylestersalze der Formel (I) und (II) in Form einer flammgeschützten Formmasse mit einer Spritzgussmaschine bei Massetemperaturen von 200 bis 250 °C bei Polystyrol, 200 bis 300 °C bei Polypropylen, 250 bis 290 °C bei Polyethylenterephthalat (PET), 230 bis 270 °C bei Polybutylenterephthalat (PBT), 260 bis 290 °C bei Polyamid 6 (PA 6), 260 bis 290 °C bei Polyamid 6.6 (PA 6.6) 6.6 und 280 bis 320 °C bei Polycarbonat zu Polymer-Formkörpern verarbeitet wird.

Bevorzugt können die Gruppen R¹ und R² linear, verzweigt oder cyclisch, Teil eines Ringsystems sein, Heteroatome tragen und/oder eine funktionelle Gruppe tragen. Bevorzugte funktionelle Gruppen sind Carbonyl-, Aldehyd-, Carboxy-, Hydroxy-, Sulfonsäure-, Nitril-, Cyano-, Epoxy- primäre, sekundäre und/oder tertiäre Aminogruppen und/oder un-, teil- oder vollsubstituierte Triazine. Bevorzugte Alkylgruppen sind C₁-C₈-Alkyl, bevorzugt sind Methyl, Ethyl, n-Propyl-, i-Propyl-, n-Butyl-, sec-Butyl-, tert-Butyl, n-Octyl-, Ethylhexyl-. Bevorzugte Carboxyalkylgruppierungen sind vom Typ (CH₂)ₙCO₂H mit n = 1 bis 6. Bevorzugte Hydroxyalkylgruppierungen sind vom Typ (CH₂)ₙOH mit n = 1 bis 6.

Bevorzugt handelt es sich bei dem erfindungsgemäßen Carboxyethyl(alkyl)phosphinsäure-Alkylestersalz um den Typ (I) mit R¹ gleich Methyl und R² gleich Methyl, z.B.: H₃C-P(=O)(ONa)-CH₂-CH₂-CO₂CH₃
H₃C-P(=O)(OMg_{1/2})-CH₂-CH₂-CO₂CH₃
H₃C-P(=O)(OCa_{1/2})-CH₂-CH₂-CO₂CH₃
H₃C-P(=O)(OZn_{1/2})-CH₂-CH₂-CO₂CH₃
H₃C-P(=O)(OAl_{1/3})-CH₂-CH₂-CO₂CH₃
H₃C-P(=O)(OTi_{1/3})-CH₂-CH₂-CO₂CH₃
H₃C-P(=O)(OCe_{1/3})-CH₂-CH₂-CO₂CH₃
H₃C-P(=O)(OFe_{1/3})-CH₂-CH₂-CO₂CH₃.
Bevorzugt handelt es sich bei dem erfindungsgemäßen
Carboxyethyl(alkyl)phosphinsäure-Alkylestersalz auch um den Typ (I) mit R¹ gleich
Ethyl und R² gleich Methyl, z.B.: H₃C-CH₂-P(=O)(ONa)-CH₂-CH₂-CO₂CH₃
H₃C-CH₂-P(=O)(OMg_{1/2})-CH₂-CH₂-CO₂CH₃
H₃C-CH₂-P(=O)(OZn_{1/2})-CH₂-CH₂-CO₂CH₃
H₃C-CH₂-P(=O)(OAl_{1/3})-CH₂-CH₂-CO₂CH₃
H₃C-CH₂-P(=O)(OTi_{1/3})-CH₂-CH₂-CO₂CH₃.

Bevorzugt handelt es sich bei dem erfindungsgemäßen
Carboxyethyl(alkyl)phosphinsäure-Alkylestersalz auch um den Typ (I) mit R¹ gleich
Methyl und R² gleich Octyl, z.B.: H₃C-P(=O)(ONa)-CH₂-CH₂-CO₂C₈H₁₇
H₃C-P(=O)(OMg_{1/2})-CH₂-CH₂-CO₂C₈H₁₇
H₃C-P(=O)(OZn_{1/2})-CH₂-CH₂-CO₂C₈H₁₇
H₃C-P(=O)(OAl_{1/3})-CH₂-CH₂-CO₂C₈H₁₇
H₃C-P(=O)(OTi_{1/3})-CH₂-CH₂-CO₂C₈H₁₇.

In einer anderen Ausgestaltung handelt es sich bei dem erfindungsgemäßen Salz um den Typ (II)
R¹-P(=O)(OR²)-CH₂-CH₂-CO₂X
wobei R¹, R² und X die gleiche Bedeutung wie in Formel (I) haben.

Bevorzugt handelt es sich bei dem erfindungsgemäßen Carboxyethyl(alkyl)phosphinsäure-Alkylestersalz um den Typ (II) mit
R¹ gleich Methyl und R2 gleich Methyl, z.B.:
H₃C-P(=O)(OCH₃)-CH₂-CH₂-CO₂Na
H₃C-P(=O)(OCH₃)-CH₂-CH₂-CO₂Ca_{1/2}
H₃C-P(=O)(OCH₃)-CH₂-CH₂-CO₂Al_{1/3}
H₃C-P(=O)(OCH₃)-CH₂-CH₂-CO₂Ti_{1/3}
H₃C-P(=O)(OCH₃)-CH₂-CH₂-CO₂Fe_{1/3}.

In einer anderen Ausgestaltung sind Teilhydroxide des Typs III bevorzugt:
[R₁₋ₚ(=O)(OX)-CH₂-CH₂-CO₂R²]_{1-y}(OH)_{y}
mit y von 0 bis kleiner gleich 1.

Bevorzugt handelt es sich bei dem erfindungsgemäßen Carboxyethyl(alkyl)phosphinsäure-Alkylestersalz um den Typ (III) mit
R¹ gleich Methyl und R2 gleich Methyl, z.B.:
[H₃C-P(=O)(OAl_{1/3})-CH₂-CH₂-CO₂CH₃]_{1-y}(OH)_{y}.

In einer weiteren Ausgestaltung sind Teilhydroxide des Typs IV bevorzugt:
[R¹-P(=O)(OR²)-CH₂-CH₂-CO₂X]_{1-y}(OH)_{y}
mit y von 0 bis kleiner gleich 1.

Bevorzugt handelt es sich bei dem erfindungsgemäßen Carboxyethyl(alkyl)phosphinsäure-Alkylestersalz um den Typ (IV) mit
R¹ gleich Methyl und R2 gleich Methyl, z.B.:
[H₃C-P(=O)(OCH₃)-CH₂-CH₂-CO₂Ca_{1/2}]_{1-y}(OH)_{y}.

Bevorzugt weisen die Carboxyethyl(alkyl)phosphinsäure-Alkylestersalze des Typs (I) bis (IV) Restfeuchten von 0,01 bis 10 Gew.-%, insbesondere von 0,1 bis 1 Gew.-%, auf.

Bevorzugt weisen die Carboxyethyl(alkyl)phosphinsäure-Alkylestersalze des Typs (I) bis (IV) mittlere Teilchengrößen von 0,1 bis 2000 µm, insbesondere von 10 bis 500 µm, auf.

Bevorzugt weisen die Carboxyethyl(alkyl)phosphinsäure-Alkylestersalze des Typs (I) bis (IV) Schüttdichten von 80 bis 1200 g/l, insbesondere von 150 bis 800 g/l, auf.

Bevorzugt weisen die Carboxyethyl(alkyl)phosphinsäure-Alkylestersalze des Typs (I) bis (IV) an Luft Zersetzungstemperaturen von 250 bis 350 °C, insbesondere von 280 bis 340 °C, auf.

Bevorzugt weisen die Carboxyethyl(alkyl)phosphinsäure-Alkylestersalze des Typs (I) bis (IV) BET-Oberflächen von 1 bis 100, insbesondere von 2 bis 20 m²/g, auf.

Bevorzugt weisen die Carboxyethyl(alkyl)phosphinsäure-Alkylestersalze des Typs (I) bis (IV) bei Zimmertemperatur Löslichkeiten von 0,1 bis 50 g/100 ml Wasser, insbesondere von 0,5 bis 20 g/100 ml Wasser, auf.

Die vorgenannten Carboxyethyl(alkyl)phosphinsäure-Alkylestersalze können nach verschiedenen Verfahren hergestellt werden.

Ein Verfahren (1) zur Herstellung von Carboxyethyl(alkyl)phosphinsäure-Alkylestern ist dadurch gekennzeichnet, dass ein Derivat einer Carboxyethyl(alkyl)phosphinsäure in einer Veresterungsreaktion mit einem Alkohol zu einem Carboxyethyl(alkyl)phosphinsäure-Alkylester umgesetzt wird.

Bevorzugtes Derivat einer Phosphinsäure sind Phosphinsäuren selbst, Phosphinsäurechloride, Phosphinsäure-Anhydride, z.B. 3-(Hydroxymethylphosphinyl) propionsäure H₃C-P(O)(OH)CH₂-CH₂-CO₂H, 2-Methyl-1,2-oxaphospholan-5-on-2-oxid cyclo-(-P(=O)(CH₃)-CH₂-CH₂-CO₂-), 2-Ethyl-1,2-oxaphospholan-5-on-2-oxid, Methyl-(2-chlorcarbonylethyl)phosphinsäurechlorid und (3-(Chloromethylphosphinyl)-propionylchlorid), H₃C-P(O)(Cl)CH₂-CH₂-COCl.

Bevorzugte Alkohole sind Methanol, Ethanol, Iso-Propanol, n-Propanol, n-Butanol, Iso-Butanol, t-Butanol, n-Amylalkohol, Iso-Amylalkohol, t-Amylalkohol, n-Hexanol, n-Octanol, Iso- Octanol, n-Tridecanol, Benzylalkohol etc.

Für die Herstellung nach Verfahren (1) kann ein Lösungsmittel eingesetzt werden, bevorzugt sind Wasser, Alkohole; aliphatische Kohlenwasserstoffe wie Pentan, Hexan, Heptan, Octan, und Petrolether, Petroleumbenzin, Kerosin, Petroleum, Paraffinöl etc.; aromatische Kohlenwasserstoffe wie Benzol, Toluol, Xylol, Mesitylen, Ethylbenzol, Diethylbenzol etc.; Halogenkohlenwasserstoffe wie Methylenchlorid, Chloroform, 1,2-Dichloroethan, Chlorobenzol, Tetrachlorkohlenstoff, Tetrabromoethylen etc.; alicyclische Kohlenwasserstoffe wie Cyclopentan, Cyclohexan, und Methylcyclohexan etc.; Ether wie Anisol (Methyl phenyl ether), t-Butylmethylether, Dibenzylether, Diethylether, Dioxan, Diphenylether, Methylvinylether, Tetrahydrofuran, Diisopropylether etc.; Glycolether wie Diethylenglycoldiethylether, Diethylenglycoldimethylether (Diglyme), Diethylenglycolmonobutylether, Diethylenglycolmonomethylether, 1,2-Dimethoxyethan (DME, Monoglyme), Ethylenglycolmonobutylether, Triethylenglycoldimethylether (Triglyme), Triethylenglycolmonomethylether etc.; Ketone wie Aceton, Diisobutylketon, Methyl-n-propylketon; Methylethylketon, Methyliso-butylketon etc.
Bevorzugt ist nach Verfahren (1) ein Verhältnis von Lösungsmittel zu Carboxyethyl(alkyl)phosphinsäure-Alkylester von 100 zu 1 bis 1 zu 100 Gew.-Teilen, besonders bevorzugt 10 zu 1 bis 1 zu 10.

Bevorzugt ist nach Verfahren (1) ein Verhältnis von Alkohol zu Carboxyethyl(alkyl)phosphinsäure-Alkylester von 100 zu 1 bis 1 zu 10 mol/mol, besonders bevorzugt 15 zu 1 bis 1 zu 1 mol/mol.

Bevorzugt ist nach Verfahren (1) eine Reaktionszeit von 0,1 bis 100 h, besonders bevorzugt 1 bis 10 h.

Bevorzugt ist nach Verfahren (1) ein pH-Wert von 1 bis 5, besonders bevorzugt von 1,4 bis 2.

Bevorzugte Temperatur für den Bildungsprozess nach Verfahren (1) ist -20 bis 300 °C, besonders bevorzugt 0 bis 80 °C.

Bevorzugter Druck für den Bildungsprozess nach Verfahren (1) ist 10 bis 100.000.000 Pa.

Bevorzugter Reaktionspartner I ist ein Salz eines Elementes der ersten Hauptgruppe, bevorzugt ein Alkalimetallhydroxid, Alkalimetalloxidhydroxid, Alkalimetallhydroxidcarbonat, Alkalimetallhydrogencarbonat, Alkalimetallcarbonat, Alkalimetallalkoholat, besonders bevorzugt Lithiumhydroxid, Natriumhydroxid, Kaliumhydroxid, Natriumcarbonat, Kaliumcarbonat, Kaliumhydrogencarbonat, Natriumhydrogencarbonat, Trona oder wässrige Lösungen davon; Natriummethylat, Natriumethylat, Natrium-n-propylat, Natrium-i-propylat, Natrium-n-butylat, Natrium-i-butylat, Natrium-tert-butylat, Natriumamylat oder Natriumglycolat.

Bevorzugte Reaktionspartner I ist auch ein Salz eines Elementes der zweiten Haupt- und Nebengruppe, bevorzugt Erdalkalimetallhydroxid, Erdalkalimetalloxidhydroxid, Erdalkalimetallhydroxidcarbonat, insbesondere Magnesium-hydroxid (Magnifin^{®} H5, Albermarle), Hydrotalcite (Mg₆Al₂(OH)₁₆CO₃*n H₂O), Dihydrotalcit, Magnesium-Carbonate oder Magnesium-Calcium-Carbonate, Calciumhydroxid, basisches Zinkcarbonat, Zinkhydroxid-carbonat, basisches Zink-carbonathydrat, Zinkhydroxide oder gemischte Zinkoxidhydroxide (Standard-Zinkoxid, Zinkweiss G6, Zinkoxid 2011, Zinkoxid F-80, Zinkweiss® Pharma 8, Zinkweiss® Pharma A, Zinkweiss® Rotsiegel, Zinkweiss® Weissiegel der Fa. Grillo-Werke AG, aktiviertes Zinkoxid z.B. von Rheinchemie, Zincit, Calamin).

Bevorzugte Komponente I ist auch ein Salz eines Elements der dritten Haupt- und Nebengruppe, bevorzugt Aluminiumhydroxid, Cerhydroxid, Lanthan-hydroxid, Aluminiumalkoholat, Ceralkoholat, Lanthanalkoholat, Aluminiumhydroxid oder gemischtes Aluminiumoxidhydroxid, Dihydroxyaluminium-natriumcarbonat (NaAl(OH)₂CO₃) und/oder Polyaluminiumhydroxy-Verbindungen, die vorzugsweise einen Aluminiumgehalt von 9 bis 40 Gew.-% besitzen.

Bevorzugt ist ein pH-Wert von 4 bis 9, besonders bevorzugt 6 bis 8,5.

Bevorzugte Komponente I ist auch ein Salz eines Elementes der vierten Haupt- und Nebengruppe, bevorzugt Zinnhydroxide, Bleihydroxide, Titanoxidhydroxide, Zirkonoxidhydroxide, Zinnalkoholate, Titanalkoholate und Zirkonalkoholate.

Bevorzugte Titanalkoholate d.h. Titan-Alkoxide sind Titan-(IV)-n-propoxid (Tilcom^{®} NPT, Vertec^{®} NPT), Titan-(IV)-n-butoxid, Titanchloridtriisopropoxid, Titan-(IV)-ethoxid oder Titan-(IV)-2-ethylhexyloxid (Tilcom^{®} EHT, Vertetec^{®} EHT).

Bevorzugtes Zinnalkoholat (Zinn-Alkoxid) ist Zinn-(IV)-tert-butoxid.

Bevorzugte Zirkonalkoholat d.h. Zirkonium-Alkoxid ist Zirkon-(IV)-tert-butoxid.

Bevorzugte Reaktionspartner II sind Aluminiumchlorid, Aluminiumnitrat, Aluminiumsulfat, Cer(III)nitrat, Eisen(III)sulfat, Titanylsulfat, Zinknitrat, Zinksulfat und/oder Zinkchlorid.

Bevorzugt ist) ein pH-Wert von 1 bis 8, insbesondere 2,5 bis 6.

Bevorzugt wird die Reaktion in einem Lösungsmittelsystem durchgeführt. Bevorzugt erfolgt die Umsetzung nach dem Verfahren gemäß den Ansprüchen 5 bis 7 bei einem Feststoffgehalt der erfindungsgemäßen Carboxyethyl(alkyl)phosphinsäure-Alkylestersalze von 0,1 bis 70 Gew.-%, bevorzugt 5 bis 40 Gew.-%.

Die Reaktion nach dem Verfahren gemäß den Ansprüchen 5 bis 7 erfolgt bevorzugt bei einer Temperatur von -20 bis +500 °C, besonders bevorzugt bei 50 bis 120 °C.

Bevorzugt beträgt das Verhältnis von Komponente I bzw. II zum Phosphor (des erfindungsgemäßen Carboxyethyl(alkyl)phosphinsäure-Alkylesters/-salzes) nach dem Verfahren gemäß den Ansprüchen 5 bis 7 0,8 bis 3 lonenequivalent (mol pro Ladung des Kations) besonders bevorzugt 1 bis 2 lonenequivalente.

Bevorzugt beträgt das Verhältnis von Lösungsmittel zum Phosphor (des erfindungsgemäßen Carboxyethyl(alkyl)phosphinsäure-Alkylesters/-salzes) nach dem Verfahren gemäß den Ansprüchen 5 bis 7 2 bis 1000 mol/mol, besonders bevorzugt 4 bis 100 mol/mol.

Bevorzugt beträgt nach dem Verfahren gemäß den Ansprüchen 5 bis 7 die Reaktionszeit 0,1 bis 100 h, besonders bevorzugt 1 bis 10 h.

Bevorzugte Temperatur für den Bildungsprozess nach dem Verfahren gemäß den Ansprüchen 5 bis 7 ist 20 bis 300 °C, besonders bevorzugt 50 bis 200 °C.

Bevorzugter Druck für den Bildungsprozess nach dem Verfahren gemäß den Ansprüchen 5 bis 7 ist 10 bis 100.000.000 Pa.

Bevorzugt erfolgt die Umsetzung nach dem Verfahren gemäß den Ansprüchen 5 bis 7 in einem Rührkessel, Mischer und/oder Kneter.

Bevorzugt erfolgt die Umsetzung nach dem Verfahren gemäß den Ansprüchen 5 bis 7 mit einem Energieeintrag von 0,083 bis 1,65 kW/m³, besonders bevorzugt 0,33 bis 1,65 kW/m³.

Bevorzugt werden die erfindungsgemäßen Carboxyethyl(alkyl)phosphinsäure-Alkylestersalze nach dem Verfahren gemäß den Ansprüchen 5 bis 7 durch Filtrieren und/oder Zentrifugieren aus dem Reaktionsgemisch abgetrennt.

Bevorzugt werden die erfindungsgemäßen Carboxyethyl(alkyl)phosphinsäure-Alkylestersalze nach dem Verfahren gemäß den Ansprüchen 5 bis 7 mit Druck-Filternutschen, Vakuum-Filternutschen, Rührwerksfilternutschen, Druck-Kerzenfilter, Axial-Blattfilter, Kreis-Blattfilter, Zentrifugal-Scheibenfilter, Kammer/Rahmenfilterpressen, Automatische Kammefilterpressen, Vakuum-Trommelzellenfilter, Vakuum-Scheibenzellenfilter, Vakuum-Innenzellenfilter, Vakuum-Planzellenfilter, Rotations-Druckfilter oder Vakuum-Bandfilter abgetrennt.

Bevorzugt beträgt der Filtrationsdruck nach dem Verfahren gemäß den Ansprüchen 5 bis 7 0,5 Pa bis 6 MPa.

Bevorzugt beträgt die Filtrationstemperatur nach dem Verfahren gemäß den Ansprüchen 5 bis 7 0 bis 400°C.

Bevorzugt beträgt die spezifische Filterleistung nach dem Verfahren gemäß den Ansprüchen 5 bis 7 10 bis 200 kg*h⁻¹*m⁻².

Bevorzugt beträgt die Restfeuchte des Filterkuchens nach dem Verfahren gemäß den Ansprüchen 5 bis 7 5 bis 60 %.

Bevorzugt werden die erfindungsgemäßen Carboxyethyl(alkyl)phosphinsäure-Alkylestersalze nach dem Verfahren gemäß den Ansprüchen 5 bis 7 mit Vollmantelzentrifugen wie Überlauf-Zentrifugen, Schäl-Zentrifugen, Kammer-Zentrifugen, Schneckenaustrags-Zentrifugen, Teller-Zentrifugen, Rohr-Zentrifugen, Siebzentrifugen wie Hänge- und Pendel-Zentrifugen, Siebschnecken-Zentrifugen, Siebschäl-Zentrifugen oder Schub-Zentrifugen abgetrennt.

Bevorzugt beträgt das Beschleunigungsverhältnis nach dem Verfahren gemäß den Ansprüchen 5 bis 7 300 bis 15.000.

Bevorzugt beträgt die Suspensionsdurchsatzleistung nach dem Verfahren gemäß den Ansprüchen 5 bis 7 2 bis 400 m^{3*}h⁻¹.

Bevorzugt beträgt die Feststoffdurchsatzleistung nach dem Verfahren gemäß den Ansprüchen 5 bis 7 5 bis 80 t*h⁻¹.

Bevorzugt beträgt die Restfeuchte des Kuchens nach dem Verfahren gemäß den Ansprüchen 5 bis 7 5 bis 60 %.

Bevorzugt werden nach dem Verfahren gemäß den Ansprüchen 5 bis 7 die Salze von erfindungsgemäßen Carboxyethyl(alkyl)phosphinsäure-Alkylestersalzen getrocknet.

Geeignete Aggregate für die Trocknung nach dem Verfahren gemäß den Ansprüchen 5 bis 7 sind Kammertrockner, Kanaltrockner, Bandtrockner (Luftgeschwindigkeit 2 bis 3 m/s), Tellertrockner (Temperatur 20 bis 400 °C), Trommeltrockner (100 - 250 °C Heißgas-Temperatur), Schaufeltrockner (50 - 300 °C Temperatur), Stromtrockner (10-60 m/s Luftgeschwindigkeit, 50 - 300 °C Abluft-Temperatur), Fließbetttrockner (0,2 - 0,5 m/s Luftgeschwindigkeit, 50 - 300 °C Abluft-Temperatur, Walzentrockner, Röhrentrockner 20 bis 200 °C Temperatur, Schaufeltrockner, Vakuumtrockenschränke (20 bis 300 °C Temperatur, 0,001 - 0,016 MPa Druck), Vakuumwalzentrockner (20 bis 300 °C Temperatur, 0,004 - 0,014 MPa Druck, Vakuumschaufeltrockner (20 bis 300 °C Temperatur, 0,003 - 0,02 MPa Druck) und Vakuumkonustrockner (20 bis 300 °C Temperatur, 0,003 - 0,02 MPa Druck).

Die Erfindung betrifft auch die Verwendung von Carboxyethyl(alkyl)phosphinsäure-Alkylestersalzne des Typs (I) bzw. (II) oder Mischungen davon als Flammschutzmittel.

Weiterhin ist Gegenstand der Erfindung die Verwendung der erfindungsgemäßen Carboxyethyl(alkyl)phosphinsäure-Alkylestersalze (I) bzw. (II) oder Mischungen davon in Flammschutzmitteln. Die erfindungsgemäßen Carboxyethyl(alkyl)phosphinsäure-Alkylestersalze sind weniger leicht aus den flammgeschützten Formmassen herauszulösen und auch bei wesentlich tieferen Temperaturen flammschutzaktiv als Vertreter nach dem Stand der Technik.

Die Erfindung betrifft auch eine flammgeschützte duroplastische Polymerformmasse, enthaltend 0,1 bis 45 Gew.-% Carboxyethyl(alkyl)phosphinsäure-Alkylestersalze des Typs (I) bzw. (II) oder Mischungen davon, 15 bis 80 Gew.-% Polystyrolbasierendes Polymer und 15 bis 80 Gew.-% Polyphenylenether, wobei die Summe der Komponenten 100 Gew.-% beträgt.

Die Erfindung betrifft auch ein flammwidrig ausgerüstetes Epoxidharz, enthaltend 0,5 bis 50 Gew.-% Carboxyethyl(alkyl)phosphinsäure-Alkylestersalze des Typs (I) bzw. (II) oder Mischungen davon, 5 bis 99,5 Gew.-% eines Epoxidharzes und 0 bis 20 Gew.-% eines Härters, wobei die Summe der Komponenten 100 Gew.-% beträgt.

Bevorzugt ist ein Verfahren zur Herstellung von flammgeschützten Polymerformmassen, dadurch gekennzeichnet, dass die erfindungsgemäßen Carboxyethyl(alkyl)-phosphinsäure-Alkylestersalze mit dem Polymergranulat und evtl. Additiven vermischt und auf einem Doppelschnecken-Extruder (ZSK 25 WLE, 14,5 kg/h, 200 U/min, L/D: 4) bei Temperaturen von 170 °C (Polystyrol), ca. 270 °C (PET, Polyethylenterephthalat), 230 bis 260 °C (Polybutylenterephthalat, PBT), von 260 °C (PA6) bzw. von 260 bis 280 °C (PA 66) eingearbeitet wird. Der homogenisierte Polymerstrang wird abgezogen, im Wasserbad gekühlt, anschließend granuliert und auf einen Restfeuchtegehalt von 0,05 bis 5 %, bevorzugt 0,1 bis 1 Gew.-% getrocknet

Bevorzugt ist auch ein Verfahren zur Herstellung einer flammgeschützten Polymerformmasse, dadurch gekennzeichnet, dass 1.000 Gewichtsteile Dimethylterephthalat und 720 Gewichtsteile Ethylenglykol und 35 bis 700 Gewichtsteile erfindungsgemäßes Carboxyethyl(alkyl)phosphinsäure-Alkylestersalz polymerisiert werden. Wahlweise kann die Polymerisation in Gegenwart von Zinkacetat erfolgen. Wahlweise kann die flammgeschützten Polymerformmasse zu Fasern gesponnen werden.

Bevorzugt handelt es sich bei dem Polymer um ein thermoplastisches oder duroplastisches Polymer.

Bevorzugt handelt es sich bei den thermoplastischen Polymeren um Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das ggf. vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den thermoplastischen Polymeren um Copolymere von Mono- und Diolefinen untereinander oder mit anderen Vinylmonomeren, wie z.B.

Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.

Bevorzugt handelt es sich bei den Polymeren um Kohlenwasserstoffharze (z.B. C₅-C₉) inklusive hydrierte Modifikationen davon (z.B. Klebrigmacherharze) und Mischungen von Polyalkylenen und Stärke.

Bevorzugt handelt es sich bei den thermoplastischen Polymeren um Polystyrol, Poly-(p-methylstyrol) und/oder Poly-(alpha-methylstyrol).

Bevorzugt handelt es sich bei den thermoplastischen Polymeren um Copolymere von Styrol oder alpha-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Blockcopolymere des Styrols, wie z.B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den thermoplastischen Polymeren um Pfropfcopolymere von Styrol oder alpha-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z.B. als so genannte ABS-, MBS-, ASA- oder AES-Polymere bekannt sind.

Bevorzugt handelt es sich bei den Polystyrolbasierenden Polymeren um Blends bestehend aus
a) 3 bis 30 Gew.-%, besonders bevorzugt 1 bis 15 Gew.-% Elastomere basierend auf Butadien-, Isopren-, Styrol-Butadien-Comonomer- und Alkylacrylat,
b) 70 bis 97 Gew.-%, besonders bevorzugt 85 bis 95 Gew.-% basierend auf Styrol und/oder Polyalkylester
c) 0 bis 5 Gew.-% basierend auf ungesättigten Nitrilmonomeren
d) 0 bis 40 Gew.-% basierend auf Acrylsäure, Methacrylsäure, Maleinanhydrid, N-substituiertes Maleimid.

Bevorzugt handelt es sich bei den thermoplastischen Polymeren um halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den thermoplastischen Polymeren um Polymere, die sich von alpha-beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den thermoplastischen Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den thermoplastischen Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um thermoplastischen Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

Bevorzugt handelt es sich bei den thermoplastischen Polymeren um Polyphenylenoxide und -sulfide und deren Mischungen mit Styrolpolymeren oder Polyamiden.

Bevorzugt handelt es sich bei den thermoplastischen Polymeren um Polyphenylenether wie z.B. Poly(2,6-dimethyl-1,4-phenylen)ether, Poly(2,6-diethyl-1,4-phenylen)ether, Poly(2,6-dipropyl-1,4-phenylen)ether, Poly(2-methyl-6-ethyl-1,4-phenylen)ether, Poly(2-methyl-6-propyl-1,4-phenylen)ether, Poly(2-ethyl-6-propyl-1,4-phenylen)ether, Poly(2,6-diphenyl-1,4-phenylen)ether, Copolymer von Poly(2,6-dimethyl-1,4-phenylen)ether und Poly(2,3,6-trimethyl-1,4-phenylen)ether, Copolymer von Poly(2,6-dimethyl-1,4-phenylen)ether und Poly(2,3,6-triethyl-1,4-phenylen)ether.

Bevorzugt handelt es sich bei den Polyphenylenethern um Poly(2,6-dimethyl-1,4-phenylen)ether der Fa. Asahi Kasei Co. of Japan (Typ S-202)

Bevorzugt handelt es sich bei den thermoplastischen Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den thermoplastischen Polymeren um Polyamide und Copolyamide, die sich von Diaminen und Dicarbonsäuren und / oder von Aminocarbonsäuren oder den entsprechenden Lactamen ableiten, wie Polyamid 4, Polyamid 6 (Akulon^{®} K122, DSM; Zytel^{®} 7301, Fa. DuPont; Durethan^{®} B 29, Fa. Bayer), Polyamid 6/6 (Zytel^{®} 101, Fa. DuPont; Durethan^{®} A30, Durethan^{®} AKV, Durethan^{®} AM, Fa. Bayer; Ultramid^{®} A3, Fa BASF) 6/10, 6/9, 6/12, 4/6, 12/12, Polyamid 11, Polyamid 12 (Grillamid^{®} L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den thermoplastischen Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den thermoplastischen Polymeren um Polycarbonate und Polyestercarbonate, um Polysulfone, Polyethersulfone und Polyetherketone.

Bevorzugt handelt es sich bei den Polymeren um Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bevorzugt ist die Verwendung der erfindungsgemäßen Carboxyethyl(alkyl)phosphinsäure-Alkylestersalze zur Herstellung von flammgeschützten Polymer-Formkörpern, -Filmen, -Fäden und -Fasern.

Bevorzugt enthalten die flammgeschützten Polymer-Formkörper, -Filme, -Fäden und -Fasern 0,5 bis 45 Gew.-% erfindungsgemäße Carboxyethyl(alkyl)phosphinsäure-Alkylestersalze,
0,5 bis 95 Gew.-% thermoplastisches Polymer oder Mischungen derselben.

Bevorzugt enthalten die flammgeschützten Polymer-Formkörper, -Filme, -Fäden und -Fasern 0,5 bis 45 Gew.-% erfindungsgemäße Carboxyethyl(alkyl)phosphinsäure-Alkylestersalze,
0,5 bis 95 Gew.-% thermoplastisches Polymer oder Mischungen derselben, 0,5 bis 55 Gew.-% Additive und 0,5 bis 55 Gew.-% Füllstoff bzw. Verstärkungsmaterialien. Bevorzugt enthalten die flammgeschützten Polymer-Formkörper, -Filme, -Fäden und -Fasern 0,1 bis 35 Gew. -% Carboxyethyl(alkyl)phosphinsäure-Alkylestersalze des Typs (I) bzw. (II), 15 bis 80 Gew. -% Polystyrolbasierendes Polymer und 15 bis 80 Gew.-% Polyphenylenether, 0,5 bis 55 Gew.-% Additive und 0 bis 55 Gew.-% Füllstoff bzw. Verstärkungsmaterialien.

Bevorzugt ist die Verwendung der erfindungsgemäßen flammgeschützten thermoplastischen Polymerformmassen zur Herstellung von flammgeschützten Polymer-Formkörpern, -Filmen, -Fäden und -Fasern.

Bevorzugt enthalten die flammgeschützten Polymer-Formkörper, -Filme, -Fäden und -Fasern 40 bis 99,5 Gew.-% erfindungsgemäße flammgeschützten thermoplastischen Polymerformmassen und 0,5 bis 60 Gew.-% thermoplastisches Polymer oder Mischungen derselben.

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen (z.B. Spritzgießmaschine (Typ Aarburg Allrounder) und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

Bevorzugt ist die Verwendung der erfindungsgemäßen Carboxyethyl(alkyl)-phosphinsäure-Alkylestersalze zur Herstellung von flammgeschützten duroplastischen Polymerformmassen.

Die Erfindung betrifft schließlich auch eine flammwidrige duroplastische Polymerformmasse enthaltend 0,1 bis 45 Gew.-% erfindungsgemäße Carboxyethyl(alkyl)-phosphinsäure-Alkylestersalze des Typs (I) oder (II), 40 bis 90 Gew.-% ungesättigten Polyester und 10 bis 60 Gew.-% Vinylmonomer. Bevorzugt handelt es sich bei den duroplastischen Polymeren um ungesättigte Polyesterharze, die sich von Copolyestern gesättigter und ungesättigter Dicarbonsäuren oder deren Anhydriden mit mehrwertigen Alkoholen, sowie Vinylverbindungen als Vernetzungsmittel ableiten. UP-Harze werden gehärtet durch radikalische Polymerisation mit Initiatoren (z.B. Peroxiden) und Beschleunigern.

Bevorzugte ungesättigte Dicarbonsäuren und -derivate zur Herstellung der Polyester sind Maleinsäureanhydrid und Fumarsäure.

Bevorzugte gesättigte Dicarbonsäuren sind Phthalsäure, Isophthalsäure, Terephthalsäure, Tetrahydrophthalsäure und/oder Adipinsäure.

Bevorzugte Diole sind 1,2-Propandiol, Ethylenglykol, Diethylenglykol und Neopentylglykol, Neopentylglykol, ethoxyliertes oder propoxyliertes Bisphenol A.

Bevorzugte Vinylverbindung zur Vernetzung ist Styrol.

Bevorzugte Härtersysteme sind Peroxide und Metallcoinitiatoren z.B. Hydroperoxide und Cobaltoctanoat und/oder Benzoylperoxid und Aromatische Amine und/oder UV-Licht und Photosensibilisatoren z.B. Benzoinether.

Bevorzugte Hydroperoxide sind Di-tert.-butylperoxid, tert.-Butylperoctoat, tert.-Butylperpivalat, tert.-Butylper-2-ethylhexanoat, tert.-Butylpermaleinat, tert.-Butylperisobutyrat, Benzoylperoxid, Diacetylperoxid, Succinylperoxid, p-Chlorbenzoylperoxid und/oder Dicyclohexylperoxiddicarbonat.

Bevorzugt werden die Initiatoren in Mengen von 0,1 bis 20 Gew.-%, vorzugsweise 0,2 bis 15 Gew.-%, berechnet auf die Masse aller Comonomeren, eingesetzt.

Bevorzugte Metallcoinitiatoren sind Kobalt-, Mangan-, Eisen-, Vanadium-, Nickel- oder Bleiverbindungen. Bevorzugt werden Metallcoinitiatoren in Mengen von 0,05 bis 1 Gew.-% berechnet auf die Masse aller Comonomeren, eingesetzt.

Bevorzugte aromatische Amine sind Dimethylanilin, Dimethyl-p-toluol, Diethyl-anilin und/oder Phenyldiethanolamine.

Ein Verfahren zur Herstellung von flammgeschützten Copolymerisaten ist dadurch gekennzeichnet, dass man (A) mindestens ein ethylenisch ungesättigtes Dicarbonsäureanhydrid, abgeleitet von mindestens einer C₄-C₈-Dicarbonsäure, (B) mindestens eine vinylaromatische Verbindung und (C) Polyol copolymerisiert, anschließend (D) mit erfindungsgemäßer Carboxyethyl(alkyl)phosphinsäure-Alkylestersalzen umsetzt.

Ein Verfahren zur Herstellung von flammwidrigen duroplastischen Massen ist dadurch gekennzeichnet, dass man ein duroplastisches Harz mit erfindungsgemäßer Carboxyethyl(alkyl)phosphinsäure-Alkylestersalze vermischt und die resultierende Mischung bei Drücken von 3 bis 10 bar und Temperaturen von 20 bis 60 °C nass presst (Kaltpressung).

Ein anderes Verfahren zur Herstellung von flammwidrigen duroplastischen Massen ist dadurch gekennzeichnet, dass man ein duroplastisches Harz mit erfindungsgemäßer Carboxyethyl(alkyl)phosphinsäure-Alkylestersalzen vermischt und die resultierende Mischung bei Drücken von 3 bis 10 bar und Temperaturen von 80 bis 150 °C nass presst (Warm- oder Heißpressung).

Die Erfindung betrifft daher auch ein flammwidrig ausgerüstetes Epoxidharz, enthaltend 0,5 bis 50 Gew.-% der erfindungsgemäßen Carboxyethyl(alkyl)phosphinsäure-Alkylestersalze des Typs (I) oder (II), 5 bis 70 Gew.-% eines Epoxidharzes und 0 bis 20 Gew.-% eines Härters.

Bevorzugt handelt es sich dabei um vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-di-glycidyl-ethern, die mittels üblichen Härtern und/oder Beschleunigern vernetzt werden.

Geeignete Glycidylverbindungen sind Bisphenol-A-diglycidylester, Bisphenol-F-diglycidylester, Polyglycidylester von Phenol-Formaldehydharzen und Kresol-Formaldehydharzen, Polyglycidylester von Pththal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen.

Geeignete Härter sind Polyamine wie Diethylentriamin Triethylentetramin, Aminoethylpiperazin, Isophorondiamin, Polyamidoamin, Diaminodiphenylmethan, Diaminodiphenolsulfone und Dicyandiamid.

Geeignete Härter sind mehrbasige Säuren oder deren Anhydride wie z.B. Phthalsäureanhydrid, Maleinsäureanhydrid, Tetrahydrophthalsäureanhydrid, Methyltetrahydrophthalsäureanhydrid, Hexahydrophthalsäureanhydrid und Methylhexahydrophthalsäureanhydrid.

Geeignete Härter sind Phenole wie z.B. Phenol-Novolak-Harz, Cresol-Novolak-Harz, Dicyclopentadien-Phenol-Addukt-Harz, Phenolaralkyl-Harz, Cresolaralkyl-Harz, Naphtholaralkyl Harz, Biphenol-modifiziertes Phenolaralkyl-Harz, Phenoltrimethylolmethan-Harz, Tetraphenylolethan-Harz, Naphthol-Novolak-Harz, Naphthol-Phenol-Kocondensat-Harz, Naphthol-Cresol-Kocondensat-Harz, Biphenol- modifiziertes Phenol-Harz und Aminotriazin- modifiziertes Phenol-Harz.

Diese Härter können alleine oder in Kombination miteinander eingesetzt werden.

Geeignete Katalysatoren bzw. Beschleuniger für die Vernetzung bei der Polymerisation sind tertiäre Amine, Benzyldimethylamin, N-Alkylpyridine, Imidazol, 1-Methylimidazol, 2-Methylimidazol, 2-Ethyl-4-methylimidazol, 2-Ethyl-4-methylimidazol, 2-Phenylimidazol, 2-Heptadecylimidazol, Metallsalz organischer Säuren, Lewis Säuren und Amin-Komplex-Salze.

Erfindungsgemäß flammwidrig ausgerüstete Epoxidharze sind geeignet zum Verguss von elektrischen bzw. elektronischen Bauteilen und für Tränk- und Imprägnierprozesse. In der Elektrotechnik werden die verwendeten Epoxidharze überwiegend flammwidrig ausgerüstet und für Leiterplatten und Isolatoren eingesetzt.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um vernetzbare Acrylharze, die sich von substituierten Acrylsäureestern ableiten, wie z.B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt ist die Verwendung der erfindungsgemäßen flammgeschützten Epoxidharze zur Herstellung von flammgeschützten duroplastischen Polymer-Formkörpern.

Die Erfindung betrifft auch eine flammgeschützte Polyurethan-Formmasse, hergestellt durch Reaktion von 0,1 bis 50 Gew.-Teilen erfindungsgemäßem Carboxyethyl(alkyl)phosphinsäure-Alkylestersalz, 30 bis 65 Gew.-Teilen Polyisocyanat und 30 bis 65 Gew.-Teilen Polyol.

Die Erfindung betrifft auch ein Verfahren zur Herstellung einer flammgeschützten Polyurethan-Formmasse, indem 170 bis 70 Gew.-Teile, bevorzugt 130 bis 80 Gew.-Teile Polyisocyanate mit 100 Gew.-Teilen Polyol, 0,1 bis 50 Gew.-Teilen erfindungsgemäßem Carboxyethyl(alkyl)phosphinsäure-Alkylestersalz und 0,1 bis 4 Gew.-Teilen, bevorzugt 1 bis 2 Gew.-Teile Katalysator zur Reaktion gebracht werden und wahlweise mit 0,1 bis 1,8 Gew.-Teilen, vorzugsweise 0,3 bis 1,6 Gew.-Teilen Treibmittel aufgeschäumt werden.

Bevorzugt ist die Verwendung der flammgeschützten Polyurethan-Formmassen zur Herstellung von flammgeschützten duroplastischen Polymer-Formkörpern.

Bevorzugte Polyole, sind Alkenoxidaddukte von Ethylenglykol, 1,2-Propandiol, Bisphenol A, Trimethylolpropan, Glycerin, Pentaerythrol, Sorbit, Zucker, abgebaute Stärke, Ethylendiamin, Diaminotoluol und/oder Anilin, die als ein Initiator dienen. Die bevorzugten Oxyalkylierungsmittel enthalten 2 bis 4 Kohlenstoffatome, besonders bevorzugt sind Ethylenoxid und Propylenoxid.

Bevorzugte Polyester-Polyole werden durch Polykondensation eines Polyalkohols wie Ethylenglykol, Diethylenglykol, Propylenglykol, 1,4-Butanediol, 1,5-Pentandiol, Methylpentandiol, 1,6-Hexanediol, Trimethylolpropan, Glycerin, Pentaerythritol, Diglycerol, Traubenzucker und/oder Sorbit, mit einer dibasischen Säure wie Oxalsäure, Malonsäure, Bernsteinsäure, Weinsäure, Adipinsäure, Sebacinsäure, Maleinsäure, Fumarsäure, Phthalsäure oder Terephthalsäure erhalten. Diese Polyester-Polyole können alleine oder in Kombination benutzt werden.

Bevorzugte Polyisocyanate sind aromatische, alicyclische oder aliphatische Polyisocyanate, mit nicht weniger als zwei Isocyanat-Groupen und Mischungen davon. Bevorzugt sind aromatische Polyisocyanate wie Tolyldiisocyanat, Methylendiphenyldiisocyanat, Naphthylendiisocyanate, Xylylendiisocyanat, Tris(4-isocyanatophenyl)methan und Polymethylenepolyphenylendiisocyanate; alicyclische Polyisocyanate sind Methylendiphenyldiisocyanat und Tolyldiisocyanat; aliphatische Polyisocyanate sind Hexamethylendiisocyanat, Isophorendiisocyanat, Demeryldiisocyanat, 1,1-Methylenbis(4-isocyanatocyclohexan-4,4'-Diisocyanatodicyclohexylmethan-Isomerengemisch, 1,4-Cyclohexyldiisocyanat, Desmodur^{®}-Typen (Bayer) und Lysindiisocyanat und Mischungen davon.

Geeignete Polyisocyanate sind modifizierte Produkte, die durch Reaktion von Polyisocyanat mit Polyol, Harnstoff, Carbodiimid und/oder Biuret erhalten werden.

Geeignete Katalysatoren sind starke Basen, Alkalimetalsalze von Carbonsäuren oder aliphatische tertiäre Amine. Bevorzugt sind quaternäres Ammoniumhydroxide, Alkalimetalhydroxid oder Alkoxid, Natrium- oder Kaliumacetat, Kaliumoctoat, Natriumbenzoat, 1,4-Diazabicyclo[2.2.2]octan, N,N,N',N'-Tetramethylhexamethylendiamin, N,N,N',N'-Tetramethylpropylendiamin, N,N,N',N',N"-Pentamethyldiethylentriamin, N,N'-Di-(C₁-C₂)-Alkylpiperazin, Trimethylaminoethylpiperazin, N,N-Dimethylcyclo-hexylamin, N,N-Dimethylbenzylamin, N-Methylmorpholin, N-Ethylmorpholin, Trimethylamin, Triethylamin, Tributylamin, Triethylenediamin, Bis(dimethylaminoalkyl)-piperazin, N,N,N',N'-Tetramethylethylendiamin, N,N-Diethylbenzylamin, Bis(N,N-diethylaminoethyl)adipat, N,N,N',N'-Tetramethyl-1,3-butandiamin, N,N-Diethyl-[beta]-phenylethylamin, 1,2-Dimethylimidazol, 2-Methylimidazol usw.

Bevorzugt ist das Gewichtverhältnis der Polyisocyanate zu Polyol 170 zu 70, vorzugsweise 130 zu 80, bezogen auf 100 Gew.-Teile des Polyols.

Bevorzugt ist das Gewichtverhältnis des Katalysators 0,1 bis 4 Gew.-Teile, besonders bevorzugt 1 bis 2 Gew.-Teile, bezogen auf 100 Gew.-Teile des Polyols.

Bevorzugte Treibmittel sind Wasser, Kohlenwasserstoffe, Fluorchlorkohlenwasserstoffe, Fluorkohlenwasserstoffe etc.

Die Menge des Blähmittels ist 0,1 bis 1,8, bevorzugt 0,3 bis 1,6 und insbesondere 0,8 bis 1,6 Gew.-Teile, bezogen auf 100 Gew.-Teile des Polyols.

Die Erfindung betrifft auch eine Intumeszenz-Flammschutz-Beschichtung enthaltend 1 bis 50 % erfindungsgemäße Carboxyethyl(alkyl)phosphinsäure-Alkylestersalze,
0 bis 60 % Ammoniumpolyphosphat
sowie 0 bis 80 Gew.-% Bindemittel, Schaumbildner, Füllstoffe und Additive.

Die Erfindung betrifft auch eine Intumeszenz-Flammschutz-Beschichtung enthaltend 1 bis 99 Gew.-% eines Epoxidharzes und 1 bis 99 Gew.-% einer Flammschutzmischung, welche ein Phosphor-Stickstoff-Flammschutzmittel und erfindungsgemäße Carboxyethyl(alkyl)phosphinsäure-Alkylestersalze enthält und 0 bis 60 Gew.-% weitere Zusätze.

Bei den Phosphor-Stickstoff-Flammschutzmitteln handelt es sich bevorzugt um Ammoniumpolyphosphate der Formel (NH₄PO₃)ₙ, worin n eine Zahl von 10 bis größer gleich 1.000, bevorzugt 200 bis größer gleich 1.000 bedeutet.

Herstellung, Verarbeitung und Prüfung von flammgeschützten Kunststoffformmassen und Kunststoff-Formkörpern

Die Flammschutzkomponenten wurden mit dem Polymergranulat und evtl. Additiven vermischt und auf einem Doppelschnecken-Extruder eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) zu Prüfkörpern verarbeitet.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:
V-0: kein Nachbrennen länger als 10 sec., Summe der Nachbrennzeiten bei 10 Beflammungen nicht größer als 50 sec., kein brennendes Abtropfen, kein vollständiges Abbrennen der Probe, kein Nachglühen der Proben länger als 30 sec. nach Beflammungsende.

V-1: kein Nachbrennen länger als 30 sec. nach Beflammungsende, Summe der Nachbrennzeiten bei 10 Beflammungen nicht größer als 250 sec., kein Nachglühen der Proben länger als 60 sec. nach Beflammungsende, übrige Kriterien wie bei V-0

V-2: Zündung der Watte durch brennendes Abtropfen, übrige Kriterien wie bei V-1

nkl: Nicht klassifizierbar, erfüllt nicht die Brandklasse V-2.

Herstellung von flammgeschützten duroplastischen Epoxidformmassen und -körpern.

Das Epoxidharz und die Flammschutzkomponenten wurden mit einer Dissolverscheibe homogen vermischt. Nach Zugabe des Härters wurde nochmals homogenisiert. In einer beheizten Presse wurden auf einer Hostaphan^{®} Trennfolie und einem Stahlrahmen zwei Lagen Textilglas-Endlosmatte vom Flächengewicht 450 g/m² eingelegt. Anschließend wurde etwa die Hälfte des Harz-Flammschutzmittel-Gemisches gleichmäßig verteilt. Nach Zugabe einer weiteren Glasmatte wurde das restliche Harz-Flammschutzmittel-Gemisch verteilt, das Laminat mit einer Trennfolie abgedeckt und bei einer Temperatur von 50 °C während einer Stunde bei einem Pressdruck von 10 bar eine Pressplatte von 1,5 mm Dicke hergestellt. An Prüfkörpern von 127 mm Länge und 12,7 mm Breite wurde die Brandklasse UL 94 (Underwriter Laboratories) an Probekörpern der Dicke 1,5 mm bestimmt.

Allgemeine Vorschrift zur Bestimmung des Ausblutens 50 g von einem flammgeschützten Polymerformmassen-Granulat oder auf Granulatgröße zerkleinertem Laminat werden bei 95 % rel. Luftfeuchte und bei 60 °C 500 h lang gelagert. Danach wird das Granulat bei Zimmertemperatur 2 h in eine 0,1 %ige wässrige Natronlauge eingetaucht. Die abgetrennte Lösung wird auf P-Gehalt untersucht. Der herausgelöste Phosphor wird prozentual auf die in der Formmasse eingesetzte Menge bezogen.

Die Erfindung wird durch die nachstehenden Beispiele näher erläutert.

### Beispiele 1 bis 3

Exolit® PE110 und MeOH wurden in den in Tabelle 1 beschriebenen Mengen in einem mit Stickstoff inertisierten Vierliter-Fünfhalskolben mit aufgesetztem Rückflusskühler, KPG-Rührer, Thermometer eingewogen und ca. 48 - 62 h bei 40 - 80 °C gerührt. Eventuell verdampftes Lösungsmittel wird nach dem Abkühlen ersetzt.

### Beispiel 4

Exolit® PE110 und n-Octanol wurden in den in Tabelle 1 beschriebenen Mengen in einem mit Stickstoff inertisiertem Zweiliter-Fünfhalskolben mit aufgesetztem Rückflusskühler, KPG-Rührer, Thermometer eingewogen und ca. 60 h bei 60 °C gerührt.

### Beispiel 5

Exolit® PE110 und Benzylalkohol wurden in den in Tabelle 1 beschriebenen Mengen in einem mit Stickstoff inertisiertem Zweiliter-Fünfhalskolben mit aufgesetztem Rückflusskühler, KPG-Rührer, Thermometer eingewogen und ca. 70 h bei 60 °C gerührt.

### Beispiele 6 bis 9

Methylesterlösungen wurden unter Kühlung bis max. 60 °C mit den in Tabelle 1 beschriebenen Mengen von 25 Gew.-% Natronlauge, 50 Gew.-% Natronlauge, wässriger NaHCO₃-Lösung und wässriger K₂CO₃-Lösung neutralisiert.

### Beispiel 10

In einem Zweiliter-Fünfhalsrundkolben mit KPG-Rührer, Thermometer, Rückflusskühler und zwei Pumpenzuläufen wird demineralisiertes Wasser vorgelegt. Bei einer Reaktionstemperatur von 90 °C wird in den Kolben innerhalb von 2 h über Pumpe 1 eine wässrige Lösung von Carboxyethyl(methyl)phosphinsäure-Methylester-Natriumsalz und über Pumpe 2 Al-Sulfat-Lösung (die mit Schwefelsäure versetzt wurde) bei einer Rührgeschwindigkeit von 400-550 U/min. gleichzeitig zugepumpt (Bedingungen siehe Tabelle 1). Nach einer Nachrührzeit von 30 Minuten wurde die Maische über eine Saugnutsche (240 mm) abfiltriert, der Filterkuchen 2 h bei 70 °C mit der 5-fachen Wassermenge redispergiert und die erhaltene Maische erneut filtriert und mit 90 °C heißem Wasser (5-fache Menge) gewaschen. Das filterfeuchte Produkt wurde 15 h bei 130 °C und 30 bis 100 mbar im Vakuumtrockenschrank getrocknet. Das Produkt ist röntgenkristallin. Folgende Reflexe (CuKalpha 1-Strahlung 1,54056 Ang) werden beobachtet: Rel. Intensität in %, d-Wert in Ang; 100,00, 11,6890; 56,48, 7,3783; 62,07, 4,4543; 80,31, 4,2741. Das Produkt zersetzt sich in der DTA bei 330 °C und ist reaktiver als ein Flammschutzmittel nach dem Stand der Technik.

### Beispiel 11

In einem Zweiliter-Fünfhals-Rundkolben wurden die in Tabelle 1 genannten Mengen von Carboxyethyl(methyl)phosphinsäure-Methylester und demineralisiertem Wasser vorgelegt und mit Magnesiumhydroxid versetzt. Der pH-Wert steigt unter leichter Erwärmung auf 30 °C an auf 4,82 - 5,15. Die Maische wurde 5 h unter Rückfluss gekocht, abgekühlt, über eine Saugnutsche klarfiltriert und das Filtrat in einem Rotationsverdampfer auf ca. 40-50 % Feststoff eingeengt. Der Rückstand wurde mit Aceton versetzt. Der Niederschlag wurde abgenutscht, mit Aceton gewaschen und 18 h bei 120 °C und 100 mbar im Vakuumtrockenschrank getrocknet. Das Produkt ist röntgenkristallin. Folgende Reflexe (CuKalpha 1-Strahlung 1,54056 Ang) werden beobachtet: Rel. Intensität in %, d-Wert in Ang; 36,02, 8,9271; 25,94, 8,3244; 64,37, 4,7600; 100,00, 4,4639; 99,14, 4,2948; 71,27, 3,7785; 54,91, 3,5518. Das Produkt zersetzt sich in der DTA bei 282 °C und ist reaktiver als ein Flammschutzmittel nach dem Stand der Technik.

### Beispiel 12

In einem Zweiliter-Fünfhals-Rundkolben wurden die in Tabelle 1 genannten Mengen von Carboxyethyl(methyl)phosphinsäure-Methylester und demineralisiertem Wasser vorgelegt und mit Zinkoxid versetzt. Die Maische wurde 5 h unter Rückfluss gekocht, abgekühlt, über eine Saugnutsche klarfiltriert und das Filtrat in einem Rotationsverdampfer auf ca. 30-40 % Feststoff eingeengt. Die Lösung wurde mit Eiswasser auf ca. 5 °C gekühlt und der Niederschlag abgenutscht. Der Filterkuchen wurde mit Aceton gewaschen und 18 h bei 120 °C und 100 mbar im Vakuumtrockenschrank getrocknet. Das Produkt ist röntgenkristallin. Folgende Reflexe (CuKalpha 1-Strahlung 1,54056 Ang) werden beobachtet: Rel. Intensität in %, d-Wert in Ang; 100,00, 8,5927; 70,47, 5,5696; 68,34, 4,2808.
Das Produkt zersetzt sich in der DTA bei 334 °C und ist reaktiver als ein Flammschutzmittel nach dem Stand der Technik.

### Beispiel 13

In einem Zweiliter-Fünfhals-Rundkolben wurden die in Tabelle 1 genannten Mengen von Carboxyethyl(methyl)phosphinsäure-Methylester und demineralisiertem Wasser vorgelegt und mit Calciumhydroxid versetzt. Der pH-Wert steigt unter leichter Erwärmung auf 50 °C auf 5,4 an.
Die Maische wurde 5 h unter Rückfluss gekocht, abgekühlt, über eine Saugnutsche klarfiltriert und das Filtrat in einem Rotationsverdampfer auf ca. 37-42 % Feststoff eingeengt. Die eingeengte Lösung wurde mit Aceton versetzt und der Niederschlag abgenutscht. Der Filterkuchen wurde mit Aceton gewaschen und 18 h bei 120 °C und 100 mbar im Vakuumtrockenschrank getrocknet. Das Produkt ist röntgenkristallin. Folgende Reflexe (CuKalpha 1-Strahlung 1,54056 Ang) werden beobachtet: Rel. Intensität in %, d-Wert in Ang; 75,31, 10,9469; 100,00, 5,4514; 60,15, 4,3041; 66,50, 2,1819. Das Produkt zersetzt sich in der DTA bei 317 °C und ist reaktiver als ein Flammschutzmittel nach dem Stand der Technik.

### Beispiel 14

In einem Zweiliter-Fünfhals-Rundkolben wurden die in Tabelle 1 genannten Mengen von Carboxyethyl(methyl)phosphinsäure-Methylester vorgelegt und mit Zinkoxid versetzt. Die Maische wurde 5 h unter Rückfluss gekocht, abgekühlt und der Niederschlag abgenutscht. Der Filterkuchen wurde mehrfach mit Aceton gewaschen und 18 h bei 120 °C und 100 mbar im Vakuumtrockenschrank getrocknet.
Das Produkt zersetzt sich in der DTA bei 323 °C und ist reaktiver als ein Flammschutzmittel nach dem Stand der Technik.

### Beispiel 15

In einem Zweiliter-Fünfhals-Rundkolben wurden die in Tabelle 1 genannten Mengen von Carboxyethyl(methyl)phosphinsäure-Methylester vorgelegt und mit Magnesiumhydroxid versetzt. Die Maische wurde 5 h unter Rückfluss gekocht, abgekühlt und der Niederschlag abgenutscht. Der Filterkuchen wurde mehrfach mit Aceton gewaschen und 18 h bei 120 °C und 100 mbar im Vakuumtrockenschrank getrocknet. Das Produkt zersetzt sich in der DTA bei 275 °C und ist reaktiver als ein Flammschutzmittel nach dem Stand der Technik.

### Beispiel 16

Von einem Flammschutzmittel nach dem Stand der Technik - Exolit® OP 1230 - werden die Zersetzungstemperatur und der mittlere Teilchendurchmesser bestimmt. Die Daten sind in Tabelle 1 aufgeführt.

### Beispiel 17 (Vergleich)

Gemäß der allgemeinen Vorschrift "Herstellung, Verarbeitung und Prüfung von flammgeschützten Kunststoffformmassen und Kunststoff-Formkörpern" wird eine Mischung von 30 Gew.-% Produkt aus EP-A-1 125 960, 1-Methylimidazolium-(2-methoxycarbonyl-ethyl)(methyl)phosphinat und 70 Gew.-% Polystyrol unter erheblicher Rauchbildung auf einem Doppelschnecken-Extruder bei 170 °C zu einer flammgeschützten Polymerformmasse compoundiert. Die Rauchbildung ist auf Zersetzung des Flammschutzmittels zurückzuführen und wird negativ bewertet. Der homogenisierte Polymerstrang wird abgezogen, im Wasserbad gekühlt und anschließend granuliert. Nach Trocknung werden die Formmassen auf einer Spritzgießmaschine bei Massetemperaturen von 200 bis 250 °C zu Polymerformkörpern verarbeitet. Der Prüfkörper erlangt nach UL-94 eine V-2 Klassifikation. Nach der entsprechenden allgemeinen Vorschrift wird gefunden, dass 24 % des Flammschutzmittels ausbluten.

### Beispiel 18

Gemäß der allgemeinen Vorschrift "Herstellung, Verarbeitung und Prüfung von flammgeschützten Kunststoffformmassen und Kunststoff-Formkörpern" wird eine Mischung von 30 Gew.-% Produkt aus Beispiel 10 und 70 Gew.-% Polystyrol auf einem Doppelschnecken-Extruder bei 170 °C zu einer flammgeschützten Polymerformmasse compoundiert. Der homogenisierte Polymerstrang wird abgezogen, im Wasserbad gekühlt und anschließend granuliert. Nach Trocknung werden die Formmassen auf einer Spritzgießmaschine bei Massetemperaturen von 200 bis 250 °C zu flammgeschützten Polymerformkörpern verarbeitet. Der Prüfkörper erlangt nach UL-94 eine V-0 Klassifikation.
Nach der entsprechenden allgemeinen Vorschrift wird gefunden, dass 4 % des Flammschutzmittels ausbluten. Dies ist sehr viel weniger als im Vergleichsversuch 17 mit einem Flammschutzmittel nach dem Stand der Technik.

### Beispiel 19

Gemäß der allgemeinen Vorschrift "Herstellung, Verarbeitung und Prüfung von flammgeschützten Kunststoffformmassen und Kunststoff-Formkörpern" wird eine Mischung von 23 Gew.-% Produkt aus Beispiel 10 und 47 Gew.-% Polystyrol und 30 Gew.-% Glasfasern auf einem Doppelschnecken-Extruder bei 170 °C zu einer flammgeschützten Polymerformmasse compoundiert. Der homogenisierte Polymerstrang wird abgezogen, im Wasserbad gekühlt und anschließend granuliert. Nach Trocknung werden die Formmassen auf einer Spritzgießmaschine bei Massetemperaturen von 200 bis 250 °C zu flammgeschützten Polymerformkörpern verarbeitet. Der Prüfkörper erlangt nach UL-94 eine V-0 Klassifikation.
Nach der entsprechenden allgemeinen Vorschrift wird gefunden, dass 4 % des Flammschutzmittels ausbluten. Dies ist sehr viel weniger als im Vergleichsversuch 17 mit einem Flammschutzmittel nach dem Stand der Technik.

### Beispiel 20

Gemäß der allgemeinen Vorschrift "Herstellung, Verarbeitung und Prüfung von flammgeschützten Kunststoffformmassen und Kunststoff-Formkörpern" wird eine Mischung von 12 Gew.-% Produkt aus Beispiel 10, 6 Gew.-% Melamincyanurat, 52 Gew.-% Polybutylenterephtalat und 30 Gew.-% Glasfasern auf einem Doppelschnecken-Extruder bei 230 bis 260 °C zu einer flammgeschützten Polymerformmasse compoundiert. Der homogenisierte Polymerstrang wird abgezogen, im Wasserbad gekühlt und anschließend granuliert. Nach Trocknung werden die Formmassen auf einer Spritzgießmaschine bei Massetemperaturen von 240 bis 270 °C zu flammgeschützten Polymerformkörpern verarbeitet. Der Prüfkörper erlangt nach UL-94 eine V-0 Klassifikation.
Nach der entsprechenden allgemeinen Vorschrift wird gefunden, dass 4 % des Flammschutzmittels ausbluten. Dies ist sehr viel weniger als im Vergleichsversuch 17 mit einem Flammschutzmittel nach dem Stand der Technik.

### Beispiel 21

Gemäß der allgemeinen Vorschrift "Herstellung, Verarbeitung und Prüfung von flammgeschützten Kunststoffformmassen und Kunststoff-Formkörpern" wird eine Mischung von 11,4 Gew.-% Produkt aus Beispiel 1, 5,7 Gew.-% Melaminpolyphosphat, 0,9 Gew.-% Zinkborat, 52 Gew.-% Polyamid 6.6 und 30 Gew.-% Glasfasern auf einem Doppelschnecken-Extruder bei 260 bis 280 °C zu einer flammgeschützten Polymerformmasse compoundiert. Der homogenisierte Polymerstrang wird abgezogen, im Wasserbad gekühlt und anschließend granuliert. Nach Trocknung werden die Formmassen auf einer Spritzgießmaschine bei Massetemperaturen von 260 bis 290 °C zu flammgeschützten Polymerformkörpern verarbeitet. Der Prüfkörper erlangt nach U-94 eine V-0 Klassifikation.
Nach der entsprechenden allgemeinen Vorschrift wird gefunden, dass 8 % des Flammschutzmittels ausbluten. Dies ist sehr viel weniger als im Vergleichsversuch 17 mit einem Flammschutzmittel nach dem Stand der Technik.

### Beispiel 22

Gemäß der allgemeinen Vorschrift "Herstellung, Verarbeitung und Prüfung von flammgeschützten Kunststoffformmassen und Kunststoff-Formkörpern" wird eine Mischung von 20 Gew.-% Produkt aus Beispiel 12, 50 Gew.-% Polyamid 6 und 30 Gew.-% Glasfasern auf einem Doppelschnecken-Extruder bei 260 bis 280 °C zu einer flammgeschützten Polymerformmasse compoundiert. Der homogenisierte Polymerstrang wird abgezogen, im Wasserbad gekühlt und anschließend granuliert. Nach Trocknung werden die Formmassen auf einer Spritzgießmaschine bei Massetemperaturen von 260 bis 290 °C zu flammgeschützten Polymerformkörpern verarbeitet. Der Prüfkörper erlangt nach UL-94 eine V-0 Klassifikation.

Nach der entsprechenden allgemeinen Vorschrift wird gefunden, dass 6 % des Flammschutzmittels ausbluten. Dies ist sehr viel weniger als im Vergleichsversuch 17 mit einem Flammschutzmittel nach dem Stand der Technik.

### Beispiel 23 (Vergleich)

Gemäß der allgemeinen Vorschrift zur "Herstellung von flammgeschützten duroplastischen Epoxidformmassen und -körpern" wird mit 17 Gew.-% Flammschutzmittel aus EP-A-1 125 960, 1-Methylimidazolium-(2-methoxycarbonylethyl)(methyl)phosphinat und den in Tabelle 2 aufgeführten Harz- und Härtermengen ein flammgeschütztes Epoxidharzlaminat hergestellt. Der Prüfkörper erlangt nach UL-94 eine V-1 Klassifikation.
Nach der entsprechenden allgemeinen Vorschrift wird gefunden, dass 15 % des Flammschutzmittels ausbluten.

### Beispiel 24

Gemäß der allgemeinen Vorschrift zur "Herstellung von flammgeschützten duroplastischen Epoxidformmassen und -körpern" wird mit 17 Gew.-% Flammschutzmittel aus Beispiel 11 und den in Tabelle 2 aufgeführten Harz- und Härtermengen ein flammgeschütztes Epoxidharzlaminat hergestellt. Der Prüfkörper erlangt nach UL-94 eine V-0 Klassifikation.
Nach der entsprechenden allgemeinen Vorschrift wird gefunden, dass 6 % des Flammschutzmittels ausbluten. Dies ist sehr viel weniger als im Vergleichsversuch 22 mit einem Flammschutzmittel nach dem Stand der Technik.

**Tabelle 3: Sonstige verwendete Chemikalien**

| | |
|---|---|
| PS1 | Polystyrol^{®} 2712, Fa. BASF |
| PS2 | Polystyrol^{®} 143 E, Fa. BASF |
| PBT | Celanex^{®} 2500, Fa. Celanese, USA |
| GF 1 | Vetrotex^{®} EC 10 983, 4,5mm, Fa. Saint Gobain |
| PA66 | Ultramid^{®} A3, Fa. BASF |
| MC | Melapur^{®} MC, Fa. Ciba SC |
| ZB | Firebrake^{®} 500, Fa. Borax |
| PA6 | Zytel^{®} 7301, Fa. DuPont |
| MPP | Melapur^{®} 200/70, Fa. Ciba SC |
| EP | Epoxidharz Beckopox^{®} EP 140, Fa. Cytec |
| EH | Härter Beckopox^{®} EH 625, Fa. Cytec |

**Tabelle 1: Erfindungsgemäße Carboxyethyl(methyl)phosphinsäure-Alkylester und deren Salze**

| Beispiel | 1 | | Komponente 2 | | | | T | t | pH | Produkt | | | | |
|---|---|---|---|---|---|---|---|---|---|---|---|---|---|---|
| | | | | | 3 | 4 | | | | Ausb. | Geh. | 31P | DTA | d50 |
| | Bez. | [g] | Bez. | [g] | [g] | [g] | [°C] | [h] | - | [%] | [P-%] | [ppm] | [°C] | [m] |
| 1 | Oxa | 143 | MeOH | 214 | - | - | 40 | 48 | 2,4 | 51 | 51 | 51,6 | - | - |
| 2 | Oxa | 1242 | MeOH | 1900 | - | - | 60 | 54 | 1,7 | 55 | 55 | 51,6 | - | - |
| 3 | Oxa | 1152 | MeOH | 1762 | - | - | 80 | 62 | 1,4 | 56 | 56 | 51,6 | - | - |
| 4 | Oxa | 446 | OctOH | 433 | - | - | 60 | 60 | 1,9 | 52 | 52 | 47,8 | - | - |
| 5 | Oxa | 473 | BzOH | 382 | - | - | 60 | 70 | 1,5 | 49 | 49 | - | - | - |
| 6 | Bsp. 2 | 985 | NaOH 25% | 272 | - | - | 40 | - | 6,2 | 87 | 48 | 38,6 | - | - |
| 7 | Bsp. 2 | 1005 | NaOH 50% | 139 | - | - | 20 | - | 8,5 | 90 | 50 | 38,6 | - | - |
| 8 | Bsp. 2 | 1084 | NaHC03-Lsng | 293 | - | - | 40 | - | 6,2 | 92 | 51 | 38,6 | - | - |
| 9 | Bsp.2 | 1037 | K2C03-Lsng | 215 | - | - | 60 | - | 6,4 | 88 | 49 | 38,6 | - | - |
| 10 | Bsp.8 | 1200 | Wasser | 1111 | 370 | 4,4 | 90 | 2 | - | 76 | 17,7 | ca.58,3 | 330 | 52 |
| 11 | Bsp. 2 | 1067 | Wasser | 227 | 50,4 | - | 100 | 5 | 5,2 | 87 | 17,5 | - | 282 | 26 |
| 12 | Bsp.2 | 1067 | Wasser | 252 | 70,4 | - | 100 | 5 | - | 88 | 15,7 | - | 334 | 19 |
| 13 | Bsp.2 | 1067 | - | - | 64,1 | - | 100 | 5 | 5,4 | 81 | 16,5 | - | 317 | 167 |
| 14 | Bsp. 4 | 879 | - | - | 70,4 | - | 150 | 10 | - | 85 | 11,9 | - | 323 | 41 |
| 15 | Bsp. 5 | 855 | - | - | 50,4 | - | 150 | 15 | - | 79 | 4,4 | - | 275 | 69 |
| 16 | OP 1230 - | | - | - | - | - | - | - | - | - | 23,9 | - | 355 | 25 |

- Zu Beispiel 1 bis 5:: Oxa = Oxaphospholan (R)Exolit PE 110, Fa. Clariant
- Zu Beispiel 1 bis 5:: MeOH = Methanol, OctOH = n-Octanol, BzOH = Benzylalkohol
- Zu Beispiel 4:: 31 P-NMR: in DMSO
- Zu Beispiel 8:: 154,1g NaHC03 in 139,4 g Wasser
- Zu Beispiel 9:: 112,5g K2C03 in 102,3 g Wasser
- Zu Beispiel 10:: Komponente 3 = Aluminiumsulfat-Lösung 4,2% Al; Komponente 3 = H2SO4 96%; Produkt: 17,8% P th
- Zu Beispiel 11:: Komponente 3 = Magnesiumhydroxid; Produkt: 17,5% P th
- Zu Beispiel 12:: Komponente 3 = Zinkoxid; Produkt: 15,7% P th
- Zu Beispiel 13:: Komponente 3 = Calciumhydroxid; Produkt: 16,7% P th
- Zu Beispiel 14:: Komponente 3 = Zinkoxid; Produkt: 11,9% P th
- Zu Beispiel 15:: Komponente 3 = Magnesiumhydroxid; Produkt: 4,4% P th
- Zu Beispiel 16:: (R)Exolit OP 1230, Fa. Clariant
- Geh:: Gehalt Zielkomponente im Produkt via 31 P-NMR
- Bez:: Bezeichnung
- Ausb:: Ausbeute
- 31 P:: ehem. Versch. 31 P-NMR
- DTA:: Differentialthermoanalyse, °C bei 2% Gew.-Verlust

**Tabelle 2: Erfindungsgemäße flammgeschützte Polymerformmassen und -körper**

| Beispiel | FSM aus | | PS 1 | PS2 | PBT | PA6 | PA66 | GF 1 | MC | MPP | ZB | EP | EH | UL-94 | Ausbluten |
|---|---|---|---|---|---|---|---|---|---|---|---|---|---|---|---|
| | | [Gew.-%] | [Gew.-%] | [Gew.-%] | [Gew.-%] | [Gew.-%] | [Gew.-%] | [Gew.-%] | [Gew.-%] | [Gew.-%] | [Gew.-%] | [Gew.-%] | [Gew.-%] | - | [%] |
| 17 | EP 1125960 | 30 | | 70 | | | | | | | | | | V-2 | 24 |
| 18 | Bsp.10 | 30 | | 70 | | | | | | | | | | V-0 | 4 |
| 19 | Bsp.10 | 23 | 47 | | | | | 30 | | | | | | V-0 | 4 |
| 20 | Bsp.10 | 12 | | | 52 | | | 30 | 6 | | | | | V-0 | 4 |
| 21 | Bsp. 10 | 11,4 | | | | | 52 | 30 | | 5,7 | 0,9 | | | V-0 | 8 |
| 22 | Bsp.12 | 20 | | | | 50 | | 30 | | | | | | V-0 | 6 |
| 23 | EP 1125960 | 17 | | | | | | | | | | 65 | 18 | V-1 | 15 |
| 24 | Bsp. 11 | 17 | | | | | | | | | | 65 | 18 | V-0 | 6 |

- Zu Beispiel 17:: 1-Methylimidazolium-(2-methoxycarbonyl-ethyl)methylphosphinat

## Patentansprüche

1. Carboxyethyl(alkyl)phosphinsäure-Alkylestersalze der Formel (I)
R¹-P(=O)(OX)-CH₂-CH₂-CO₂R²
worin R¹ und R² gleich oder verschieden sind und unabhängig voneinander C₁-C₂₀-Alkyl, C₂-C₂₀-Alkenyl, C₁-C₂₀-Alkinyl, und/oder C₆-C₂₀-Aralkyl und X ein Alkalimetall, ein Element der zweiten Haupt- und Nebengruppe, ein Element der dritten Haupt- und Nebengruppe, ein Element der vierten Haupt- und Nebengruppe, ein Element der fünften Haupt- und Nebengruppe, ein Element der sechsten Nebengruppe, ein Element der siebten Nebengruppe oder ein Element der achten Nebengruppe bedeuten.

2. Carboxyethyl(alkyl)phosphinsäure-Alkylestersalze nach Anspruch 1, **dadurch gekennzeichnet, dass** R¹ und R² gleich oder verschieden sind und unabhängig voneinander H, Methyl, Ethyl, n-Propyl, i-Propyl, n-Butyl, tert.-Butyl, n-Pentyl und/oder Phenyl bedeuten.

3. Carboxyethyl(alkyl)phosphinsäure-Alkylestersalze nach Anspruch 1 oder 2, **dadurch gekennzeichnet, dass** X Li, Na, K; Mg, Ca, Zn, Sr; Al, Ce, La; Ge, Sn, Pb, Ti, Zr; Sb, Bi; Cr, Mo, W; Mn; Fe, Co oder Ni bedeutet.

4. Carboxyethyl(alkyl)phosphinsäure-Alkylestersalze nach einem oder mehreren der Ansprüche 1 bis 3, **dadurch gekennzeichnet, dass** X H, Na, Al, Zn, Ca, Mg, Ti oder Ce bedeutet.

5. Verfahren zur Herstellung von Carboxyethyl(alkyl)phosphinsäure-Alkylestersalzen der Formel (I), worin R¹, R² und X die gleiche Bedeutung wie in Anspruch 1 haben, **dadurch gekennzeichnet, dass** ein Carboxyethyl(alkyl)phosphinsäure-Alkylester der Formel (I), worin R¹, R² die gleiche Bedeutung wie in Anspruch 1 haben und X gleich H ist, in einem Lösungsmittelsystem mit einem Reaktionspartner I, bei dem es sich um eine Verbindung eines Alkalimetalls, eines Elements der zweiten Haupt- und Nebengruppe, eines Elements der dritten Haupt- und Nebengruppe, eines Elements der vierten Haupt- und Nebengruppe, eines Elements der fünften Haupt- und Nebengruppe, eines Elements der sechsten Nebengruppe, eines Elements der siebten Nebengruppe oder eines Elements der achten Nebengruppe handelt, umgesetzt wird.

6. Verfahren zur Herstellung von Carboxyethyl(alkyl)phosphinsäure-Alkylestersalzen der Formel (I) worin R¹, R² die gleiche Bedeutung wie in Anspruch 1 haben und X ein Element der zweiten Haupt- und Nebengruppe, ein Element der dritten Haupt- und Nebengruppe, ein Element der vierten Haupt- und Nebengruppe, ein Element der fünften Haupt- und Nebengruppe, ein Element der sechsten Nebengruppe, ein Element der siebten Nebengruppe oder ein Element der achten Nebengruppe ist, **dadurch gekennzeichnet, dass** ein Carboxyethyl(alkyl)phosphinsäure-Alkylester-Alkalisalz der Formel (I), worin R¹, R² die gleiche Bedeutung wie in Anspruch 1 haben und X ein Alkalimetall bedeutet, in einem Lösungsmittelsystem mit einem Reaktionspartner II umgesetzt wird.

7. Verfahren nach Anspruch 6, **dadurch gekennzeichnet, dass** es sich bei dem Reaktionspartner II um Borate, Carbonate, Hydroxide, Oxide, Oxidhydroxide, Hydrogencarbonate, Hydrogencarbonathydrate, gemischte Hydrogencarbonate, gemischte Hydrogencarbonathydrate, Phosphate, Sulfate, Sulfathydrate, Hydrogensulfathydrate, gemischte Hydrogensulfathydrate, Oxysulfate, Acetate, Nitrate, Fluoride, Fluoridhydrate, Chlorid, Chloridhydrate, Oxychloride, Bromide, Iodide, lodidhydrate Carbonsäurederivate und/oder Alkoxide eines Elements der zweiten Haupt- und Nebengruppe, eines Elements der dritten Haupt- und Nebengruppe, eines Elements der vierten Haupt- und Nebengruppe, eines Elements der fünften Haupt- und Nebengruppe, eines Elements der sechsten Nebengruppe, eines Elements der siebten Nebengruppe oder eines Elements der achten Nebengruppe handelt.

8. Verwendung von Carboxyethyl(alkyl)phosphinsäure-Alkylestersalzen der Formel (I) nach mindestens einem der Ansprüche 1 bis 4 als Flammschutzmittel, insbesondere Flammschutzmittel für Klarlacke und Intumeszenzbeschichtungen, Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern, -Filmen, -Fäden und -Fasern und/oder zum flammhemmend Ausrüsten von Polyester und Cellulose-Rein- und Mischgeweben durch Imprägnierung.

9. Verwendung von Carboxyethyl(alkyl)phosphinsäure-Alkylestersalzen der Formel (I) nach mindestens einem der Ansprüche 1 bis 4 als Binder für Giesereimassen, Formsande; als Vernetzer bzw. Beschleuniger beim Aushärten von Epoxyharzen, Polyurethanen und ungesättigten Polyesterharzen;
als Polymerstabilisatoren, wie als Lichtschutzstabilisator, Radikalfänger und/oder Thermostabilisatoren für Baumwollgewebe, Polymerfasern, Kunststoffe;
als Pflanzenschutzmittel, wie als Pflanzenwachstumsregulator, als Herbizid, Pestizid oder Fungizid;
als Therapeutikum oder Additiv in Terapeutika für Menschen und Tiere, z.B. als Enzymmodulator, zur Stimulierung von Gewebewachstum;
als Sequestrierungsmittel zur Kontrolle von Ablagerungen in industriellen Wasserleitungssystemen, bei der Mineralölgewinnung und in Metallbehandlungsmittel,
Mineralöl-Additiv z.B. als Antioxidans und zur Erhöhung der Octanzahl, als Korrosionsschutzmittel,
in Wasch- und Reinigungsmittelanwendungen, als Entfärbungsmittel,
in Elektronikanwendungen in Polyelektrolyten für Kondensatoren, Batterien und Akkumulatoren, sowie als Radikalfänger in photosensitiven Schichten,
als Aldehydfänger,
als Formaldehydfänger in Klebemassen und Formkörpern.

10. Flammgeschützte thermoplastische Polymerformmasse enthaltend 0,5 bis 45 Gew.-% Carboxyethyl(alkyl)phosphinsäure-Alkylestersalze der Formel (I) nach mindestens einem der Ansprüche 1 bis 4 und 0,5 bis 99,5 Gew.-% thermoplastisches Polymer oder Mischungen derselben, wobei die Summe der Komponenten 100 Gew.-% beträgt.

11. Flammgeschützte thermoplastische Polymerformmasse nach Anspruch 10, **dadurch gekennzeichnet, dass** es sich bei den thermoplastischen Polymeren um Polymere von Mono- und Diolefinen, beispielsweise Polyethylen, Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; um Polyvinylchlorid, Polyvinylidenchlorid, Polyvinylfluorid, Polyvinylidenfluorid; um Polyacrylate und Polymethacrylate, Polyacrylamide, Polyacrylnitrile, Polyvinylalkohol, Polyvinylacetat Polyalkylenglykole, Polyethylenoxyd, Polypropylenoxyd Polyoxymethylen Polyphenylenoxide und -sulfide Polyphenylenether,Polyurethane, Polyamide und Copolyamide, Polyharnstoffe, Polyimide, Polyamidimide, Polyetherimide, Polyesterimide, Polyhydantoine und Polybenzimidazole; um Polyester wie etwa Polyethylenterephthalat oder Polybutylenterephthalat handelt.

12. Flammgeschützte duroplastische Masse, enthaltend 0,1 bis 45 Gew.-% Carboxyethyl(alkyl)phosphinsäure-Alkylestersalze der Formel (I) nach mindestens einem der Ansprüche 1 bis 4, 40 bis 89,9 Gew.-% ungesättigte Polyester und 10 bis 60 Gew.-% Vinylmonomer, wobei die Summe der Komponenten 100 Gew.-% beträgt.

13. Verfahren zur Herstellung von flammgeschützten Polymerformmassen, **dadurch gekennzeichnet, dass** die Carboxyethyl(alkyl)phosphinsäure-Alkylestersalze der Formel (I) mit einem Polymergranulat und evtl. Additiven vermischt und auf einem Doppelschnecken-Extruder bei Temperaturen von 170 °C (Polystyrol), ca. 270 °C (PET, Polyethylenterephthalat), 230 bis 260 °C (Polybutylenterephthalat, PBT), von 260 °C (PA6) bzw. von 260 bis 280 °C (PA 66) eingearbeitet wird, dann der homogenisierte Polymerstrang abgezogen, im Wasserbad gekühlt, anschließend granuliert und auf einen Restfeuchtegehalt von 0,05 bis 5 %, bevorzugt 0,1 bis 1 Gew.-% getrocknet wird.

14. Flammwidrig ausgerüstetes Formmasse, enthaltend 0,5 bis 50 Gew.-% Carboxyethyl(alkyl)phosphinsäure-Alkylestersalze der Formel (I) nach mindestens einem der Ansprüche 1 bis 4, 5 bis 99,5 Gew.-% eines Epoxidharzes und 0 bis 20 Gew.-% eines Härters, wobei die Summe der Komponenten 100 Gew.-% beträgt.

15. Verwendung von flammwidrig ausgerüsteten Formmassen nach mindestens einem der Ansprüche 10 bis 12 oder 14 zur Herstellung von flammgeschützten Polymer-Formkörpern, -Filmen, -Fäden und -Fasern.

16. Mischungen, enthaltend 0,1 - 99,9 Gew.-% Carboxyethyl(alkyl)phosphinsäure-Alkylestersalze der Formel (I) und 0,1 - 99,9 Gew.-% Carboxyethyl(alkyl)-phosphinsäure-Alkylestersalze der Formel (II)
R¹-P(=O)(OR²)-CH₂-CH₂-CO₂X
wobei R¹, R² und X die gleiche Bedeutung wie in Anspruch 1 haben.

17. Verwendung von Mischungen nach Anspruch 16 zur Herstellung von flammgeschützten Polymerformmassen und von flammgeschützten Polymer-Formkörpern, -Filmen, -Fäden und -Fasern.

18. Verfahren zur Herstellung von flammgeschützten Polymer-Formkörpern, **dadurch gekennzeichnet, dass** eine flammgeschützte Formmasse nach mindestens einem der Ansprüche 10 bis 12 oder 14 oder Mischungen nach Anspruch 16 in Form einer flammgeschützten Formmasse mit einer Spritzgussmaschine bei Massetemperaturen von 200 bis 250 °C bei Polystyrol, 200 bis 300 °C bei Polypropylen, 250 bis 290 °C bei Polyethylenterephthalat (PET), 230 bis 270 °C bei Polybutylenterephthalat (PBT), 260 bis 290 °C bei Polyamid 6 (PA 6), 260 bis 290 °C bei Polyamid 6.6 (PA 6.6) 6.6, 280 bis 320 °C bei Polycarbonat zu Polymer-Formkörpern verarbeitet wird.
